# FASCICULE DE BREVET EUROPEEN

(11) **EP 1 367 776 B1**
(45) Date de publication et mention de la délivrance du brevet: **05.12.2007**
(21) Numéro de dépôt: 03291176.0
(22) Date de dépôt: 20.05.2003
(51) Int. Cl.: H04L 12/28, H04Q 7/38

(54) **Procédé et dispositif de contrôle d'accès à un réseau local de communication sans fil**
Zugriffskontrollverfahren und -gerät für ein drahtloses LAN
Method and device for controlling access to a wireless local communication network

(30) Priorité: 30.05.2002 FR 0206641
(43) Date de publication de la demande: 03.12.2003
(73) Titulaire: Alcatel Lucent, 75008 Paris (FR)
(72) Inventeur: Loeffler, Siegfried, 75014 Paris (FR); Laine, Philippe, 92130 Issy-les-Moulineaux (FR); Sehier, Philippe, 78100 Saint Germain en Laye (FR)
(74) Mandataire: Sciaux, Edmond

(56) Documents cités:
- EP-A- 1 191 763
- EP-A- 1 207 708
- GB-A- 2 313 257

## Description

L'invention concerne le domaine des communications entre terminaux au sein de réseaux, et plus particulièrement le contrôle de l'accès à un réseau local sans fil.

Les opérateurs de téléphonie mobile mettent à la disposition de leurs clients, pourvus d'équipements de communications mobiles, de nombreux services, comme par exemple l'accès à un réseau public tel qu'Internet ou à des réseaux privés tels que des réseaux Intranet d'entreprise. Cependant, en raison de la forte densité d'équipements mobiles utilisés simultanément dans certains endroits dits « points chauds », tels que les gares ou les aéroports, d'une part, les temps d'accès à ces services sont souvent importants, et d'autre part, les interruptions sont assez fréquentes.

Une solution connue pour remédier à cet inconvénient consiste à permettre à certains équipements mobiles de se connecter à des réseaux locaux de communications sans fil (plus connus sous l'acronyme anglais WLAN pour « Wireless Local Area Network »), déjà implantés, notamment dans certains points chauds, et raccordés au réseau Internet via un fournisseur d'accès et parfois à des réseaux Intranet via le réseau Internet. Or, pour pouvoir se connecter à un WLAN, un utilisateur doit tout d'abord savoir qu'il est dans la zone de couverture d'un WLAN et qu'il a le droit de connecter son équipement mobile à ce WLAN.

D'autre part, il faut que le WLAN puisse authentifier cet utilisateur. Son équipement mobile doit être muni non seulement du matériel traditionnel d'accès à ce type de réseau, comme par exemple une carte WLAN amovible ou intégrée), mais également de matériels complémentaires spécifiques, et notamment d'un dispositif de lecture d'une seconde carte SIM destinée à assurer suffisamment de sécurité d'utilisation à l'utilisateur final. Ces matériels complémentaires spécifiques augmentent l'encombrement et/ou le poids de l'équipement mobile. De plus, ils sont à la charge de l'utilisateur puisqu'ils ne sont pas installés en série.

Le document GB 2.313.257 décrit un procédé permettant à un utilisateur de savoir qu'il est dans la zone de couverture d'un WLAN, mais c'est l'utilisateur qui doit prendre l'initiative d'établir une communication avec un serveur relié au réseau principal, pour savoir s'il est dans la zone de couverture d'un réseau local auquel il aurait le droit d'accéder. Soit le terminal détermine sa position (avec un récepteur GPS par exemple) et il indique sa localisation au serveur ; le serveur tient compte alors de cette localisation pour fournir, le cas échéant, des données identifiant un réseau local, ou des réseaux locaux dont les zones de couverture couvrent la localisation du terminal. Soit le serveur fournit des données qui définissent des zones de couverture de réseaux locaux existant à de nombreux endroits, et le terminal doit alors comparer lui-même sa position avec les zones de couverture des réseaux locaux, pour déterminer lui-même s'il est dans une zone de couverture. Ce procédé connu a l'inconvénient de nécessiter que l'utilisateur prenne l'initiative d'établir une communication avec un serveur.

L'invention a donc pour but de remédier à tout ou partie des inconvénients précités. Elle propose à cet effet un procédé de contrôle d'accès à au moins un réseau local de communications sans fil (WLAN-i) présentant une zone locale de couverture au moins en partie incluse dans une zone principale de couverture d'au moins un réseau principal de communications, consistant à :
- déterminer la position de certains au moins des équipements mobiles de communications appartenant à des clients dudit réseau principal présents dans ladite zone principale,
- détecter des équipements mobiles dont la position est dans la zone locale de couverture du réseau local de communications sans fil,
- et à adresser, à au moins un équipement mobile qui a été détecté, via ledit réseau principal, un message signalant à son utilisateur qu'il est placé dans la zone locale d'un réseau local auquel il peut se connecter;
**caractérisé :**
- en ce que pour détecter un équipement mobile dont la position est dans la zone locale de couverture du réseau local de communications sans fil, il consiste à comparer, dans des moyens de gestion du réseau principal, la position de chaque équipement mobile à la position d'au moins une zone locale,
- et en ce que pour adresser un message, à un équipement mobile qui a été détecté, il consiste à sélectionner, dans des moyens de gestion du réseau principal, parmi des identifiants primaires identifiant des équipements mobiles sensiblement positionnés dans cette zone locale.

On entend ici par « sensiblement positionné dans la zone locale », le fait d'être soit à l'intérieur de la zone locale, soit à proximité (ou dans le voisinage) de cette zone locale. Par ailleurs, on entend ici par équipement mobile de communications tout équipement (ou terminal) mobile pouvant recevoir des messages du réseau principal de l'opérateur de téléphonie mobile dont son équipement mobile dépend. Cet équipement dispose, de préférence, de moyens d'accès à un réseau local sans fil, de type WLAN. Mais, cela n'est pas obligatoire. L'équipement mobile qui reçoit le message peut en effet être, par exemple, un téléphone portable « traditionnel », appartenant à une personne disposant d'un autre équipement mobile équipé de moyens d'accès à un réseau local sans fil. Cet autre équipement mobile peut être, par exemple, un microordinateur portable ou un assistant numérique personnel (ou PDA) équipé d'une carte amovible ou intégrée répondant à une norme du type 802.11.

Ainsi, l'utilisateur-client n'a pas besoin d'adapter spécifiquement son équipement mobile. Chaque fois qu'il se trouve positionné dans ou à proximité d'un réseau local sans fil, il reçoit automatiquement de l'opérateur téléphonique du réseau principal dont il est le client, sur l'un de ses équipements mobiles, un message, comme par exemple un SMS (pour « Short Messaging System »). Il peut alors faire une demande d'accès à un service via le réseau local sans fil.

Préférentiellement, après la phase de sélection d'identifiant(s) primaire(s), on accède à une première table de correspondance entre des identifiants primaires d'équipements mobiles et des autorisations d'accès (et/ou des intérêts à accéder) aux réseaux locaux, afin de retenir parmi les identifiants primaires sélectionnés ceux qui possèdent une autorisation d'accès au réseau local dans la zone locale duquel l'équipement mobile associé est positionné. Dans ce cas, on n'adresse des messages qu'aux équipements mobiles dont les identifiants primaires ont été retenus.

Egalement de préférence, cette demande d'accès comporte une procédure d'authentification d'identifiant(s). A cet effet chaque message peut comporter un identifiant secondaire, tel qu'un mot de passe, de préférence à usage unique, devant être fourni au réseau local sans fil lors de la tentative de connexion de l'équipement mobile à ce réseau local. On prévoit alors une seconde table de correspondance entre des identifiants secondaires et des identifiants tertiaires, tels que des noms d'utilisateurs, à laquelle on accède à réception d'un identifiant secondaire, associé à un identifiant tertiaire, pour effectuer l'authentification. Puis, en cas d'authentification on autorise l'équipement mobile à accéder au réseau local. Cette autorisation peut être donnée soit pour une session de durée illimitée, soit pour une session limitée en durée ou en volume de données transmises.

Par ailleurs, en cas de demande d'accès à un réseau privé sécurisé via un réseau local sans fil, on établit préférentiellement un tunnel de liaison sécurisé, tel qu'un « tunnel IPsec », entre le réseau privé et le réseau local.

En outre, en cas d'accès d'un équipement mobile à un service payant, via un réseau local, on peut procéder à la récupération des données de paiement relatives à ce service afin de le facturer via le réseau principal auquel il est rattaché.

L'invention porte également sur un dispositif de contrôle d'accès à au moins un réseau local de communications sans fil présentant une zone locale de couverture au moins en partie incluse dans une zone principale de couverture d'au moins un réseau principal de communications équipé de moyens de positionnement d'équipements mobiles de communications, tels qu'un LBS (pour « Location Based Service »).

Ce dispositif se caractérise par le fait qu'il comporte des moyens de gestion couplés aux moyens de positionnement et agencés pour :
- comparer les positions de certains au moins des équipements mobiles à celle d'au moins une zone locale, de manière à sélectionner les identifiants primaires des équipements mobiles sensiblement positionnés dans cette zone locale, et
- adresser au serveur de messagerie, du réseau principal auquel est rattaché chaque équipement mobile sélectionné, des instructions comportant au moins son identifiant primaire, de sorte qu'il adresse à cet équipement mobile, via son réseau principal de rattachement, un message signalant à son utilisateur qu'il est placé dans la zone locale d'un réseau local auquel il peut se connecter.

Préférentiellement, le dispositif comporte également une première mémoire dans laquelle est stockée une première table de correspondance entre des identifiants primaires d'équipements mobiles et des autorisations d'accès (et/ou des intérêts à accéder) aux réseaux locaux. Dans ce cas, le module de gestion est couplé à la première mémoire et agencé pour accéder à la première table de correspondance pour retenir parmi les identifiants primaires sélectionnés ceux qui possèdent une autorisation d'accès et/ou un intérêt à accéder au réseau local dans la zone locale duquel l'équipement mobile associé est positionné.

Egalement de préférence, les moyens de gestion peuvent adresser au serveur de messagerie concerné des instructions qui comportent en outre un identifiant secondaire attribué, tel qu'un mot de passe, propre à l'utilisateur de l'équipement mobile retenu ou sélectionné, cet identifiant secondaire devant être fourni par l'équipement mobile correspondant à l'un des points d'accès du réseau local dans lequel il est positionné, en cas de tentative de connexion à ce réseau local. Dans ce cas, on prévoit une seconde mémoire, couplée aux moyens de gestion, et dans laquelle est stockée une seconde table de correspondance entre les identifiants secondaires attribués et des identifiants tertiaires associés. Préférentiellement, cette seconde mémoire est agencée de manière à supprimer de la seconde table chaque identifiant secondaire ayant servi à l'équipement mobile associé pour accéder à un réseau local.

L'invention porte en outre sur une installation de communications comprenant au moins un réseau principal de communications, au moins un réseau local de communications sans fil, et un dispositif du type de celui présenté ci-avant.

Préférentiellement, cette installation comprend un serveur d'authentification comportant la seconde mémoire et agencé pour effectuer la procédure d'authentification d'identifiants à réception d'un identifiant tertiaire et d'un identifiant secondaire, par confrontation avec les identifiants stockés dans la seconde table. Dans ce cas, chaque réseau local comporte au moins un point d'accès capable, à réception d'un identifiant secondaire associé à un identifiant tertiaire, d'une part, d'adresser au serveur d'authentification une requête d'authentification des identifiants secondaire et tertiaire reçus, et d'autre part, en cas d'authentification par le serveur d'authentification, d'autoriser l'équipement mobile désigné par l'identifiant tertiaire à accéder au réseau local dans lequel il est positionné.

L'installation peut également comprendre un ou plusieurs réseaux privés sécurisés, de préférence raccordé(s) à l'un au moins des réseaux principaux et au réseau Internet, et comprenant chacun au moins un serveur d'accès, et des moyens de liaison couplés aux réseaux et capables, en cas de demande d'accès à un réseau privé sécurisé via l'un des réseaux locaux sans fil, d'établir un tunnel sécurisé entre le réseau privé et le réseau local.

L'installation peut également comprendre un serveur de facturation agencé, en cas d'accès à un service payant par un équipement mobile via l'un des réseaux locaux sans fil, à récupérer les données de paiement relatives à ce service et à adresser une facture représentative dudit service à un serveur de gestion du réseau principal dont l'utilisateur de l'équipement mobile est client.

Par ailleurs, chaque réseau local est préférentiellement raccordé au réseau public Internet via un serveur d'accès d'un fournisseur d'accès.

L'invention peut être mise en oeuvre dans de nombreux types de réseaux de communications, privé ou public, et en particulier dans les réseaux locaux sans fil de type WLAN et les réseaux de communications pour équipements mobiles offrant des services de messagerie et de localisation, comme notamment les réseaux GSM, GPRS et UMTS, ainsi que les réseaux d'accès par satellite, tels que Thuraya et Iridium.

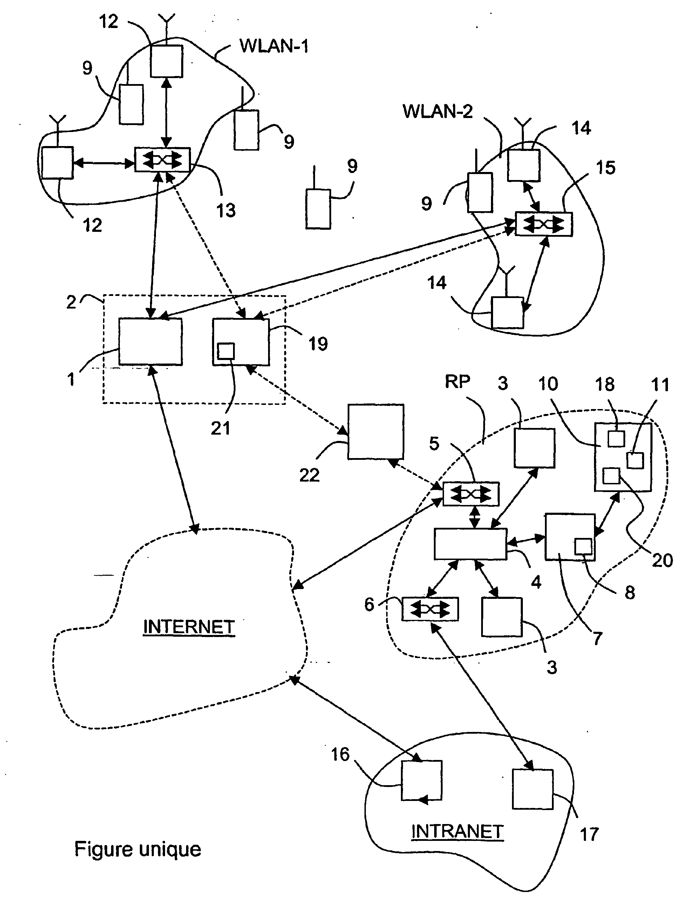

D'autres caractéristiques et avantages de l'invention apparaîtront à l'examen de la description détaillée ci-après, et de l'unique figure annexée qui illustre de façon schématique un exemple de réalisation d'une installation selon l'invention. Cette figure est, pour l'essentiel, de caractère certain. En conséquence, elle pourra non seulement servir à compléter l'invention, mais aussi contribuer à sa définition, le cas échéant.

L'installation de communications selon l'invention comporte au moins un réseau principal de (radio-)communications RP, appartenant à un opérateur de téléphonie mobile, un réseau public de type INTERNET, au moins un serveur d'accès à Internet 1 d'un fournisseur d'accès, et au moins un premier réseau local sans fil WLAN-1, de préférence raccordé au serveur d'accès à Internet 1. Sur la figure, le rectangle en pointillés référencé 2 matérialise l'ensemble des fournisseurs d'accès.

Le réseau principal RP est implanté (ou déployé) dans un espace géographique tel qu'un pays, appelé zone principale. Il s'agit par exemple d'un réseau de type GSM, GPRS OU UMTS. Ce type de réseau ne faisant pas l'objet de l'invention, et étant parfaitement connu de l'homme de l'art, il ne sera donc pas décrit en détail ici. Pour simplifier, il comporte une multiplicité de stations de base 3 d'émission/réception, également appelées Node-B dans le cas d'un réseau UMTS ou BTS dans le cas d'un réseau de type GSM (ou GPRS), associées chacune à une cellule couvrant une partie de la zone principale et couplés directement ou indirectement à plusieurs types de terminaux 4, 5 et 6, appelés noeuds. Dans le cas d'un réseau GPRS, ces noeuds sont par exemple un SGSN 4 (pour « Service GPRS Serving Node »), des BSC (pour « Base Station Controller »), dans le cas des réseaux dits « 2G » ou « 2,5G », ou des RNC (pour Radio Network Controller », dans le cas des réseaux dits « 3G », couplés au SGSN 4, un GGSN 5 (pour « Gateway GPRS Serving Node ») couplé au SGSN 4 et au réseau INTERNET, et un CN 6 (pour « Core Network ») couplé au SGSN 4 et à au moins un réseau privé INTRANET sur lequel on reviendra plus loin.

Par ailleurs, dans l'exemple illustré le noeud SGSN 4 est également couplé à un serveur de localisation 7 comprenant un module de positionnement 8 destiné à détecter et enregistrer les positions des équipements (ou terminaux) de communications mobiles 9 des clients du réseau principal RP, ainsi que, par exemple dans le cas des réseaux GSM et UMTS, à un HLR (pour « Home Location Register »), comportant la base des clients du réseau principal RP. Ces équipements mobiles 9 sont par exemple des téléphones portables, des microordinateurs portables ou des assistants numériques personnels (ou PDA), auxquels sont associés des identifiants primaires tels que des numéros de téléphone ou des adresses de messagerie, ou tout autre identifiant de nature à les différencier les uns des autres et à permettre que des messages leurs soient adressés.

Enfin, toujours dans l'exemple illustré, le serveur de localisation 7 est couplé à un serveur de services 10, de type réseau intelligent (ou IN pour « Intelligent Network »), équipé d'un module de services de localisation 11, tel qu'un LBS (pour « Location Based Services »). Ce serveur de services à réseau intelligent 10 est couplé au HLR et permet d'introduire dans le réseau principal RP, à l'aide d'une « couche » supplémentaire d'intelligence implantée entre les commutateurs/routeurs et les applications de services, des services nouveaux et des fonctionnalités nouvelles, sans modifier la structure du réseau principal. Le module de services de localisation 11 est destiné à assurer tout type de service présentant un rapport avec la localisation des équipements mobiles 9 des clients. Il fonctionne par conséquent en collaboration avec le serveur de localisation 7.

Dans une variante de réalisation, on peut se passer du serveur de localisation 7 en implantant le module de positionnement 8 dans le serveur de services 10. On peut également envisager que le module de services de localisation 11 (ou LBS) assure lui-même la fonction de détection et d'enregistrement des positions, impartie au module de positionnement 8. Dans ce cas, le serveur de services 10, et par conséquent son module de services de localisation 11, est raccordé au HLR et/ou au SGSN 4 par les mécanismes classiques du réseau intelligent IN.

Grâce à ce réseau principal RP, les clients de l'opérateur de téléphonie mobile peuvent établir des liaisons entre leurs équipements de communications mobile 9 et des équipements de communications distants, fixes ou mobiles. Ils peuvent notamment accéder à INTERNET, éventuellement via le serveur d'accès à Internet 1 d'un fournisseur d'accès, ou à un réseau privé tel que celui référencé INTRANET sur la figure.

Bien entendu, plusieurs réseaux principaux, appartenant à des opérateurs différents, coexistent généralement sur une même zone géographique, chacun de ces réseaux principaux ayant ses propres clients.

Le premier réseau local sans fil WLAN-1 est, par exemple, implanté (ou déployé) dans une zone aéroportuaire, appelée première zone locale, incluse dans la zone principale. Il s'agit par exemple d'un réseau de type WLAN (pour « Wireless Local Area Network ») muni d'un ou plusieurs points d'accès 12 auxquels peuvent se connecter par voie d'onde des équipements de communications mobiles 9 pourvus d'un matériel de connexion à un réseau local sans fil (par exemple une carte PC WLAN ou PDA WLAN, amovible ou intégrée, répondant à la norme 802.11). Ces points d'accès 12 sont couplés à un routeur (ou « access routeur ») 13, lui-même raccordé au serveur d'accès à Internet 1 d'un fournisseur d'accès.

Dans l'exemple illustré sur l'unique figure, l'installation comporte également un second réseau local sans fil WLAN-2, de préférence raccordé au serveur d'accès à Internet 1, et un réseau privé, de type Intranet, référencé INTRANET.

Le second réseau local sans fil WLAN-2 est par exemple du même type que le premier réseau local sans fil WLAN-1. Il est, par exemple, implanté (ou déployé) dans une zone ferroviaire comprenant une gare, appelée seconde zone locale, incluse dans la zone principale. Ses points d'accès 14 sont couplés à un routeur (ou « access routeur ») 15, lui-même raccordé au serveur d'accès à Internet 1 d'un fournisseur d'accès, ici le même que celui du premier réseau local WLAN-1, mais il pourrait s'agir d'un autre serveur d'accès.

Le réseau privé INTRANET est par exemple un réseau d'entreprise équipé d'un premier serveur pare-feu 16, pour l'accès sécurisé au réseau INTERNET, de préférence de type « IPsec Firewall/Gateway», ainsi qu'éventuellement d'un second serveur pare-feu 17 sécurisé raccordé au noeud 6 du réseau principal RP. Grâce à ces deux serveurs pare-feu 16 et 17, un client du réseau principal RP, travaillant pour l'entreprise possédant le réseau privé INTRANET, peut se connecter à distance à ce réseau, via ledit réseau principal RP, et au réseau INTERNET, via ledit réseau privé INTRANET.

Dans l'exemple illustré, les différents réseaux sont représentés par des courbes fermées matérialisant leurs zones de couverture respectives. Les zones de couverture du réseau INTERNET et du réseau principal RP étant beaucoup plus grandes que celles des autres réseaux, et les incluant, elles ont par conséquent été matérialisées en pointillés.

L'installation selon l'invention comporte un dispositif destiné, dans l'exemple illustré, à contrôler l'accès aux deux réseaux locaux de communications sans fil WLAN-1 et WLAN-2.

Plus précisément, ce dispositif est destiné à permettre l'établissement de liaisons entre les équipements mobiles 9, de certains clients du réseau principal RP, et le réseau INTERNET et/ou le réseau privé INTRANET, via l'un des réseaux locaux sans fil WLAN-i (ici, i=1, 2). De la sorte, le niveau de qualité des services proposés par l'opérateur du réseau principal RP peut être maintenu, voire même amélioré, notamment lorsque le WLAN offre une bande passante supérieure à celle offerte par ledit réseau principal RP. Bien entendu, comme indiqué précédemment seuls sont concernés par ce type d'accès les clients disposant d'un équipement de communications mobile 9 pourvu d'un matériel standard de connexion à un réseau local sans fil (par exemple une carte PC WLAN ou PDA WLAN, amovible ou intégrée, répondant à la norme 802.11).

Pour atteindre cet objectif, le dispositif selon l'invention comporte, de préférence, une première mémoire 18 stockant une première table de correspondance entre des identifiants primaires d'équipements mobiles 9 rattachés à un réseau principal RP et des autorisations d'accès (et/ou des intérêts à accéder) aux réseaux locaux sans fils WLAN-i. Dans cette première table, un identifiant primaire peut, par exemple, être associé à plusieurs réseaux sans fils lorsque le client correspondant dispose de plusieurs autorisations (et/ou intérêts) d'accès négocié(e)s avec l'opérateur du réseau principal RP. Comme indiqué précédemment, cet identifiant primaire ne désigne pas forcément l'équipement mobile qui sera en mesure de se connecter à un réseau local sans fil. Cela peut être le cas, mais il peut également désigner un premier équipement mobile, de type téléphone portable, appartenant à un client disposant d'un second équipement mobile en mesure d'établir la connexion précitée, comme par exemple un PDA ou un micro-ordinateur.

Lorsque plusieurs opérateurs coexistent, ce qui est généralement le cas, on prévoit une première mémoire 18 pour chaque réseau principal d'opérateur. Celle-ci est alors préférentiellement implantée dans un serveur de l'opérateur, par exemple le serveur de services 10, comme illustré sur la figure. On peut également stocker une copie de chaque première table dans un serveur 19, par exemple de type AAA (pour «Autorisation, Authentication, Accounting »), commun aux différents fournisseurs d'accès à Internet. Le dispositif selon l'invention comporte principalement un module de gestion 20 couplé au module de positionnement 8, au module de services de localisation 11 et à la première mémoire 18 lorsqu'elle existe.

Ce module de gestion 20 est préférentiellement implanté dans le serveur de services 10 de l'opérateur. Mais il pourrait être implanté dans un autre serveur de l'opérateur, comme par exemple le serveur de localisation 7. Plus précisément, il est préférable de l'implanter dans le même serveur que celui dans lequel est implantée la première mémoire 18. Il est destiné à effectuer plusieurs opérations.

Une première opération consiste à comparer les positions des équipements mobiles 9, répertoriés comme étant adaptés à la connexion aux réseaux locaux sans fil WLAN-i ou associés à un autre équipement mobile de communications adapté à ce type de connexion, fournies par le module de positionnement 8 du serveur de localisation 7, aux positions des première et seconde zones locales, afin de sélectionner ceux qui sont sensiblement positionnés dans l'une de ces zones locales ou dans leur voisinage.

Une deuxième opération consiste à adresser à un module, chargé de la messagerie de localisation au sein du réseau principal RP auquel sont rattachés les équipements mobiles 9 sélectionnés, des instructions comportant au moins leur identifiant primaire et un code lui ordonnant d'adresser à chaque équipement mobile 9 désigné par l'un des identifiants primaires reçus, via le réseau principal RP, un message signalant à son utilisateur qu'il peut se connecter au réseau local sans fil WLAN-i dans lequel il est positionné ou dans la zone locale duquel il est sur le point de pénétrer. Ce module est de préférence le module de services de localisation 11, implanté dans le serveur de services intelligent 10, notamment lorsque ce module 11 est du type LBS.

Lorsque le module 11 est de type LBS, et qu'il est couplé au HLR qui contient la base d'informations sur les clients du réseau principal RP, on peut envisager que le module de gestion 20 lui transmette tous les identifiants primaires des équipements mobiles détectés de sorte qu'il décide de n'adresser des messages qu'aux équipements mobiles associés à un identifiant primaire inscrit dans une liste, stockée dans une mémoire, ou dans la première table, par exemple en correspondance d'une autorisation d'accès à un WLAN.

Lorsque l'on prévoit une première table de correspondance, le module de gestion 20, est préférentiellement agencé de manière à effectuer une troisième opération entre les première et seconde opérations. Cette troisième opération consiste à accéder à la première table de correspondance, stockée dans la mémoire 18, pour déterminer parmi les équipements mobiles 9 sélectionnés, ceux qui possèdent une autorisation d'accès (et/ou un intérêt à accéder) au réseau local dans la zone locale duquel ils sont positionnés. Cette détermination s'effectue à partir des identifiants primaires associés aux équipements mobiles 9. Par conséquent, ce sont des identifiants primaires que l'on retient (ou sélectionne) lors de cette détermination. Dans ce cas, les messages ne sont adressés qu'aux équipements mobiles dont les identifiants primaires ont été retenus.

A réception des instructions, le module de services de localisation 11 génère un message spécifique pour chaque équipement mobile 9 sélectionné ou retenu. Préférentiellement, ces messages sont du type SMS (pour « Short Messaging System »), mais il pourrait également s'agir de courriers électroniques (ou « e-mails »).

Lorsqu'un client reçoit un message sur son équipement mobile 9, il peut alors tenter de se connecter au réseau local sans fil WLAN-i dans la zone locale duquel il est positionné, soit pour obtenir des informations internes à ce réseau, soit pour se connecter au réseau INTERNET ou éventuellement à son réseau d'entreprise INTRANET.

Deux cas peuvent être envisagés selon que l'équipement mobile 9 est effectivement adapté à la connexion au WLAN-i, ou qu'il n'est pas adapté à ce type de connexion, mais qu'il appartient à un client possédant en plus un PDA, ou un micro-ordinateur mobile, équipé pour ce type de connexion. Dans cette seconde situation, le client reçoit sur son téléphone portable « traditionnel » 9 le message (SMS) émis par son réseau principal RP, et doit tenter de se connecter avec son PDA ou son micro-ordinateur équipé 9.

Il n'est pas absolument nécessaire que l'équipement mobile 9 détecté soit déjà à l'intérieur d'une zone locale. On peut en effet envisager que l'opération de détection intègre une notion de distance seuil. Ainsi, lorsque l'équipement mobile se trouve placé à une distance de la bordure d'une zone locale inférieure à la distance seuil, on peut lui adresser un message. Cela peut notamment permettre de l'avertir qu'il est sur le point d'entrer dans une zone locale, ou qu'il est à proximité d'une zone locale, dans laquelle il pourra tenter de se connecter au réseau local sans fil associé. Un client peut en effet, grâce à l'invention, se rendre dans une zone locale proche dans le seul but d'établir une connexion qu'il n'arrive pas à établir en dehors de cette zone. Par conséquent, on peut envisager que le message comporte une information représentative de la distance qui sépare l'équipement mobile 9 de la bordure d'une zone locale. On peut par conséquent envisager que le message comprenne des informations permettant à l'utilisateur de trouver la zone locale voisine, dont la présence lui est signalée.

La connexion de l'équipement mobile 9 du client au réseau local sans fil WLAN-i s'effectue par l'intermédiaire de son point d'accès 12 ou 14 le plus proche. Le point d'accès 12 ou 14 transmet alors une page d'accueil, de type « web », à l'équipement mobile 9 pour qu'il puisse bénéficier des informations propres au réseau local sans fil WLAN-i et/ou se connecter au réseau INTERNET ou à un réseau INTRANET, via le serveur d'accès à Internet 1 auquel le routeur 13 du réseau local sans fil WLAN-i est raccordé.

Préférentiellement, la connexion au réseau INTERNET ou à un réseau INTRANET s'effectue de façon sécurisée. A cet effet, on peut incorporer dans les messages adressés aux équipements mobiles retenus (ou détectés), un identifiant secondaire, tel qu'un mot de passe alphanumérique.

Ce mot de passe est de préférence attribué par le module de gestion 20, et résulte, par exemple, d'un tirage de type aléatoire. Dans ce cas, l'identifiant secondaire est adressé au module de services de localisation 11 avec les autres instructions de génération de message. Cet identifiant secondaire est de préférence stocké dans une seconde table en correspondance d'un identifiant tertiaire qui peut être un nom d'utilisateur ou un identifiant primaire. Cette seconde table est par exemple stockée dans la première mémoire 18. Pour des raisons de rapidité de traitement, il est également préférable de stocker une copie des secondes tables propres aux différents opérateurs dans une seconde mémoire 21 du serveur 19, commun aux différents fournisseurs d'accès à Internet. Cela est particulièrement intéressant lorsque ledit serveur 19 est du type AAA, puisqu'un tel serveur est notamment conçu pour effectuer des procédures d'authentification. Dans ce cas, pour permettre le transfert des secondes tables des réseaux principaux vers le serveur 19 de type AAA, on prévoit un serveur 22, par exemple de type « proxy », couplé de préférence au noeud GGSN 5 de chaque réseau principal RP et audit serveur 19 de type AAA. Lorsqu'une procédure d'authentification est envisagée, les points d'accès 12 et 14 des réseaux locaux sans fil WLAB-i doivent être adaptés de manière à fournir aux équipements mobiles 9 une page d'accueil invitant l'utilisateur à fournir l'identifiant secondaire qu'il a reçu de son réseau principal RP, ainsi qu'éventuellement son nom d'utilisateur (identifiant tertiaire). Certains points d'accès, tels que ceux commercialisés par la société COLUBRIS, sont équipés à cet effet.

Une fois en possession de ces identifiants secondaire et tertiaire, le point d'accès 12 ou 14 adresse une requête d'authentification au serveur 19, de type AAA, via le routeur 13 ou 15. Cette requête est préférentiellement transmise sous la forme de la page web enrichie des identifiants fournis par l'utilisateur. Elle est préférentiellement transmise selon le protocole sécurisé HTTPS (pour « HyperText Transfer Protocol Secure »). A réception de cette requête, le module d'authentification extrait les identifiants secondaire et tertiaire qu'elle contient et les compare à ceux qui sont stockés dans la seconde table de la seconde mémoire 21. Lorsque le module d'authentification a terminé sa procédure d'authentification, il génère un message d'autorisation ou d'interdiction de connexion.

En cas d'autorisation, le point d'accès 12 ou 14 concerné donne accès aux services disponibles à l'équipement mobile 9. Si l'utilisateur adresse au point d'accès une requête d'accès au réseau INTERNET, son équipement mobile 9 y est alors raccordé via le routeur 13 ou 15 du WLAN-i et via le serveur d'accès 1 auquel est raccordé ledit routeur. Si l'utilisateur adresse au point d'accès une requête d'accès à un réseau privé, comme par exemple le réseau d'entreprise INTRANET, alors il est préférable d'établir préalablement une liaison sécurisée (ou tunnel sécurisé) entre le WLAN-i et le serveur pare-feu 16, de type firewall/gateway, du réseau INTRANET, via le réseau INTERNET. Préférentiellement, ce tunnel sécurisé utilise un protocole internet sécurisé pour réseau privé virtuel (ou VPN pour « Virtual Private Network »), du type « IPsec », lequel est adapté à la connexion de réseaux privés distants via un réseau IP public. Bien entendu, le serveur pare-feu 16 doit être compatible avec ce type de protocole sécurisé.

Préférentiellement, les identifiants secondaires sont dits « à usage unique », de sorte qu'ils ne puissent permettre qu'une unique connexion d'un équipement mobile 9 à un réseau local sans fil WLAN-i. Pour mettre en oeuvre cette fonctionnalité, au moins quatre solutions peuvent être envisagées. Une première solution consiste à supprimer de la seconde table le couple (identifiant secondaire, identifiant tertiaire) dès que l'autorisation de connexion correspondante a été donnée. Une seconde solution consiste à attendre que l'équipement mobile 9 se soit déconnecté d'un point d'accès 12 ou 14 pour adresser au serveur 19, dans lequel est préférentiellement implantée la seconde mémoire 21, une requête de suppression du couple associé à cet équipement. La déconnexion peut être détectée par observation du trafic. Par exemple, lorsqu'il n'y a plus de trafic on peut appliquer un « time out ». Une troisième solution consiste à autoriser l'accès à un WLAN pendant une durée limitée choisie, par exemple une heure, indépendamment du nombre de connexion. Dans ce cas, la suppression du couple, dans la seconde mémoire 21 est ordonnée lorsque ladite durée est expirée. Une quatrième solution consiste à supprimer le couple, dans la seconde mémoire 21, lorsqu'un certain quota de données a été transmis, indépendamment du nombre de connexion.

Grâce à ce type de connexion via un WLAN, le client d'un opérateur de téléphonie mobile peut notamment adresser des courriers électroniques (ou « e-mail »), ou accéder à sa messagerie pour lire les courriers électroniques qu'il a reçus, ou encore accéder à des informations privées, sans passer par le réseau principal RP de son opérateur.

Lorsque l'utilisateur accède à des services payants via le WLAN, la collecte des informations de facturation de service est effectuée par un module de collection, préférentiellement implanté dans le serveur 19 commun aux fournisseurs d'accès. Cela est particulièrement intéressant lorsque ledit serveur 19 est du type AAA, puisqu'il dispose d'un tel module de collection.

Une fois collectées, les informations de facturation sont adressées à l'opérateur dont l'utilisateur est client.

Le module de gestion 20 peut être réalisé sous la forme de circuits électroniques, de modules logiciels (ou informatiques), ou d'une combinaison de circuits et de logiciels.

Dans l'installation selon l'invention, on peut envisager que chaque opérateur soit équipé d'un dispositif ou bien qu'il existe un dispositif commun à tous les opérateurs. On entend ici par « dispositif », au moins un module de gestion pouvant être couplé à la première table, et à un module de positionnement 8, détectant et enregistrant les positions nominales des équipements de communications mobile 9 des clients d'un réseau principal RP, et par exemple implanté dans un serveur de localisation de type HLR, ainsi qu'à un module de services de localisation 11, tel qu'un LBS, par exemple implanté dans un serveur de services 10, de type réseau intelligent. Le dispositif peut également comporter une première table de correspondance entre des identifiants primaires et des autorisations d'accès à des réseaux locaux sans fil, stockée dans une première mémoire 18, et/ou une seconde table de correspondance entre des identifiants secondaires et des identifiants tertiaires, stockée dans une seconde mémoire 21.

Par ailleurs, dans ce qui précède on a fait allusion à des équipements mobiles 9 appartenant à un utilisateur client d'un opérateur de réseau principal RP. Mais, on peut envisager que certains équipements mobiles appartiennent à des utilisateurs qui ne sont pas clients de l'opérateur, et qui de ce fait ne peuvent pas être localisés par l'opérateur d'un réseau principal RP. Afin de permettre à ces personnes de se raccorder au réseau local sans fil WLAN-i dans la zone locale duquel elles sont placées, deux solutions peuvent être envisagées.

Une première solution consiste à mettre à la disposition des utilisateurs potentiels, de préférence dans des points de vente implantés dans les zones locales concernées (mais cela pourrait être ailleurs), des cartes à gratter payantes (ou « scratch cards ») contenant un identifiant secondaire, tel qu'un mot de passe alphanumérique, ainsi qu'éventuellement un nom d'utilisateur.

Une seconde solution consiste à prévoir un serveur vocal accessible, par exemple, via une cabine publique en composant un numéro dédié à tarif surtaxé (de type 0836...). Une fois la liaison établie avec le serveur vocal, celui-ci délivre à l'appelant un identifiant secondaire, tel qu'un mot de passe alphanumérique, ainsi qu'éventuellement un nom d'utilisateur.

Dans ces deux solutions, une fois que l'utilisateur est en possession de son mot de passe (ainsi qu'éventuellement de son nom d'utilisateur), ledit utilisateur peut alors se connecter, à l'aide de son équipement mobile muni des moyens de connexion appropriés, à un point d'accès 12 ou 14 du WLAN-i dans la zone locale duquel il se trouve. Préférentiellement les identifiants secondaires (et noms d'utilisateurs), inscrits sur les cartes payantes ou délivrés par le serveur vocal par téléphone, sont stockés dans la seconde mémoire 21 du serveur 19, de sorte que la procédure d'authentification puisse être effectuée. Le mode de fonctionnement est ensuite identique à celui présenté ci-avant, si ce n'est que l'accès au réseau Internet et/ou à un réseau Intranet, via le WLAN-i, ou simplement au WLAN-i, ne fait l'objet d'aucune facturation, et ne concerne que des services gratuits.

L'invention offre également un procédé de contrôle d'accès à un ou plusieurs réseaux locaux de communications sans fil (de type WLAN) présentant chacun une zone locale de couverture au moins en partie incluse dans la zone principale de couverture d'un ou plusieurs réseaux principaux de communications.

Celui-ci peut être mis en oeuvre à l'aide du dispositif et de l'installation présentés ci-avant. Les fonctions et sous-fonctions principales et optionnelles assurées par les étapes de ce procédé étant sensiblement identiques à celles assurées par les différents moyens constituants le dispositif et l'installation, seules seront résumées ci-après les étapes mettant en oeuvre les fonctions principales du procédé selon l'invention. Ce procédé consiste :
- tout d'abord, à détecter la position de certains au moins des équipements mobiles de communications qui appartiennent à des clients d'un réseau principal, présents dans sa zone principale, puis
- à comparer ces positions à celles des zones locales afin de sélectionner les identifiants primaires des équipements mobiles qui sont sensiblement positionnés dans l'une des zones locales, et
- à adresser à chaque équipement mobile sélectionné, via son réseau principal, un message signalant à son utilisateur qu'il peut se connecter au réseau local dans la zone locale duquel il est positionné.

La connexion peut alors s'effectuer soit directement, soit après une étape d'authentification. Dans ce dernier cas, les messages adressés aux équipements mobiles comportent également un identifiant secondaire, de préférence à usage unique.

On peut également prévoir une étape additionnelle, après la phase de sélection d'identifiant(s) primaire(s), consistant à accéder à une première table de correspondance entre des identifiants primaires d'équipements mobiles et des autorisations d'accès aux réseaux locaux, afin de retenir ceux qui possèdent une autorisation d'accès (ou un intérêt à accéder) au réseau local dans la zone locale duquel l'équipement mobile associé est positionné. Dans ce cas, on n'envoie des messages qu'aux équipements mobiles dont les identifiants primaires ont été retenus.

L'invention concerne tous les réseaux principaux publics de radiotéléphonie offrant des services de messagerie et de localisation, et notamment ceux de type GSM, GPRS et UMTS, les réseaux Internet (IP), tous les réseaux privés, et tous les réseaux locaux sans fil, notamment ceux de type WLAN. Mais, elle concerne également les réseaux d'accès par satellite, tels que Thuraya et Iridium.

L'invention ne se limite pas aux modes de réalisation de procédé, d'installation et de dispositif décrits ci-avant, seulement à titre d'exemple, mais elle englobe toutes les variantes que pourra envisager l'homme de l'art dans le cadre des revendications ci-après.

## Revendications

1. Procédé de contrôle d'accès à au moins un réseau local de communications sans fil présentant une zone locale de couverture au moins en partie incluse dans une zone principale de couverture d'au moins un réseau principal de communications, procédé dans lequel
i) On détermine la position de certains au moins des équipements mobiles de communication (9) appartenant à des clients du réseau principal, présents dans la zone principale,
ii) On compare, dans des moyens de gestion (20) du réseau principal, lesdites positions de certains au moins desdits équipements mobiles (9) à la position d'au moins une zone locale, pour sélectionner les identifiants primaires des équipements mobiles positionnés dans ladite zone locale ou positionnés à une distance de la bordure de ladite zone locale, cette distance étant inférieure à une distance seuil déterminée,
**Caractérisé en ce que**
iii) On adresse à un serveur de messagerie (10) du réseau principal des instructions comportant au moins l'identifiant primaire de chaque équipement mobile (9) sélectionné, de sorte qu'il adresse automatiquement à chacun desdits équipements mobiles un message signalant à son utilisateur qu'il est placé dans la zone locale d'un réseau local auquel il peut se connecter.

2. Procédé selon la revendication 1, **caractérisé en ce** pour adresser un message à un équipement mobile (9) qui a été détecté, il consiste en outre, après la sélection d'identifiants primaires, à
■ accéder à une première table de correspondance entre des identifiants primaires d'équipements mobiles et des autorisations d'accès à un réseau local, de manière à retenir parmi les identifiants primaires sélectionnés ceux associés à une autorisation d'accès audit réseau local, puis
■ adresser des messages aux équipements mobiles (9) dont les identifiants primaires ont été retenus.

3. Procédé selon la revendication 1, **caractérisé en ce que** chaque message comporte un identifiant secondaire propre, et **en ce qu'**en cas de tentative de connexion au réseau local l'utilisateur d'un équipement mobile sélectionné ou retenu doit fournir l'identifiant secondaire qu'il a reçu.

4. Procédé selon la revendication 3, **caractérisé en ce qu**'à réception d'un identifiant secondaire, associé à un identifiant tertiaire, on accède, via ledit réseau local, à une seconde table de correspondance entre des identifiants secondaires et des identifiants tertiaires, de manière à authentifier ladite association, puis en cas d'authentification on autorise l'équipement mobile (9) à accéder audit réseau local.

5. Procédé selon la revendication 3, **caractérisé en ce que** l'identifiant secondaire est à usage unique.

6. Procédé selon la revendication 1, **caractérisé en ce que** lesdits messages sont adressés selon le mode « Short Messaging System ».

7. Procédé selon la revendication 1, **caractérisé en ce qu'**en cas d'accès à un réseau privé sécurisé via ledit réseau local, on établit une liaison entre lesdits réseaux privé et local par un tunnel sécurisé.

8. Procédé selon la revendication 1, **caractérisé en ce qu'**en cas d'accès à un service payant via ledit réseau local, on procède à une récupération des données de paiement relatives audit service accédé, en vue de facturer ledit service via ledit réseau principal auquel est rattaché l'équipement mobile (9) ayant accéder audit service.

9. Dispositif de contrôle d'accès à au moins un réseau local de communications sans fil présentant une zone locale de couverture au moins en partie incluse dans une zone principale de couverture d'au moins un réseau principal de communications, équipé de moyens de positionnement d'équipements mobiles de communication (8), et comprenant des moyens de gestion (20) couplés auxdits moyens de positionnement (8) et agencés pour
i) comparer les positions de certains au moins desdits équipements mobiles (9) à là position d'au moins une zone locale; pour sélectionner les identifiants primaires des équipements mobiles positionnés dans ladite zone locale ou positionnés à une distance de la bordure de ladite zone locale, cette distance étant inférieure à une distance seuil déterminée, et **caractérisé en ce qu'**il comprend des moyens de gestion agencés pour
ii) adresser à un serveur de messagerie (10) du réseau principal des instructions comportant au moins l'identifiant primaire de chaque équipement mobile (9) sélectionné, de sorte qu'il adresse automatiquement à chacun desdits équipements mobiles un message signalant à son utilisateur qu'il est placé dans la zone locale d'un réseau local auquel il peut se connecter.

10. Dispositif selon la revendication 9, **caractérisé en ce qu**'il comprend une première mémoire (18) stockant une première table de correspondance entre des identifiants primaires d'équipements mobiles (9) et des autorisations d'accès à un réseau local, et en ce que ledit module de gestion (20) est couplé à la première mémoire (18) et agencé pour accéder à la première table de correspondance, de manière à retenir parmi les identifiants primaires sélectionnés ceux qui possèdent, une autorisation d'accès au réseau local dans la zone locale duquel l'équipement mobile associé est positionné.

11. Dispositif selon la revendication 9, **caractérisé en ce que** lesdits moyens de gestion (20) sont agencés pour adresser audit serveur de messagerie (10) des instructions comportant un identifiant secondaire attribué propre à chaque équipement mobile (9) retenu, ledit identifiant secondaire devant être fourni par un équipement mobile correspondant à l'un des points d'accès (12,14) du réseau local en cas de tentative de connexion audit réseau local.

12. Dispositif selon la revendication 11, **caractérisé en ce qu**'il comprend une seconde mémoire (21) alimentée par lesdits moyens de gestion (20) et agencée pour stocker une seconde table de correspondance entre les identifiants secondaires attribués et des identifiants tertiaires associés, ce dernier devant être fourni conjointement avec l'identifiant secondaire associé.

13. Dispositif selon la revendication 12, **caractérisé en ce que** ladite seconde mémoire (21) est agencée pour supprimer de ladite seconde table, chaque identifiant secondaire ayant servi à un équipement mobile (9) pour accéder audit réseau local.

14. Dispositif selon la revendication 9, **caractérisé en ce que** lesdits moyens de gestion (20) sont agencés pour contrôler l'accès à au moins deux réseaux locaux indépendants.

15. Installation de communications comprenant au moins un réseau principal de communications et au moins un réseau local de communications sans fil, **caractérisée en ce qu**'elle comprend en outre un dispositif selon l'une des revendications 9 à 14.

16. Installation selon la revendication 15, **caractérisée en ce qu**'elle comprend un serveur d'authentification (19) comportant ladite seconde mémoire (21) et agencé pour effectuer une procédure d'authentification d'identifiants à réception d'un identifiant tertiaire et d'un identifiant secondaire par confrontation aux identifiants stockés dans la seconde table, et en ce que chaque réseau local comporte au moins un point d'accès (12,14) agencé, à réception d'un identifiant secondaire associé à un identifiant tertiaire, pour
i) adresser audit serveur d'authentification (19) une requête d'authentification desdits identifiants secondaire et tertiaire reçus, et
ii) en cas d'authentification par ledit serveur d'authentification (19), autoriser l'équipement mobile (9) désigné par l'identifiant tertiaire à accéder au réseau local dans lequel il est positionné.

17. Installation selon la revendication 15, **caractérisée en ce qu**'elle comprend également au moins un réseau privé sécurisé, comprenant au moins un serveur d'accès (16,17) raccordé à l'un au moins desdits réseaux principaux, et des moyens de liaison couplés auxdits réseaux et propres, en cas de demande d'accès à un réseau privé sécurisé via l'un desdits réseaux locaux, à établir un tunnel sécurisé entre ledit réseau privé et ledit réseau local.

18. Installation selon la revendication 17, **caractérisée en ce que** ledit réseau privé est raccordé à un réseau public.

19. Installation selon la revendication 15, **caractérisée en ce qu**'elle comprend un serveur de facturation (19) agencé, en cas d'accès à un service payant par un équipement mobile (9) via l'un desdits réseaux locaux, à récupérer les données de paiement relatives audit service accédé, et à adresser une facture représentative dudit service à un serveur de gestion (10) du réseau principal dont l'utilisateur dudit équipement mobile est client.

20. Installation selon la revendication 15, **caractérisée en ce que** ledit réseau local est raccordé au réseau public via un serveur d'accès d'un fournisseur d'accès (1).

21. Installation selon la revendication 15, **caractérisée en ce que** ledit réseau principal est raccordé au réseau public.

22. Utilisation des procédé, dispositif et installation selon l'une des revendications précédentes dans les réseaux choisis dans un groupe comprenant les réseaux publics de communications pour équipements mobiles, offrant des services de messagerie et de localisation, les réseaux locaux sans fil de type WLAN, et les réseaux d'accès par satellite.

23. Utilisation selon la revendication 22, **caractérisé en ce que** les réseaux PLMN comprennent les réseaux GSM, GPRS et UMTS.

## Claims

1. A method for controlling access to a wireless communications local area network having a local coverage area, at least part of which is within a main coverage area of a main communications network, the method comprising the steps of:
i) determining the position of at least some of the mobile communications devices (9) belonging to customers of the main network, present in the main coverage area,
ii) comparing, within management means (20) of the main network, the positions of at least some said mobile devices (9) to the position of at least one local area, to select the primary identifiers of the mobile devices positioned in said local area, or positioned at a distance from the border of said local area, this distance being less than a determined threshold distance,
the method being **characterized in that** by
iii) sending instructions to a messaging server (10) of the main network, the instructions including the primary identifier of each selected mobile device (9), so that the server sends automatically to each of said mobile devices a message telling its user that it is in the local area of a local area network to which it can connect.

2. A method according to claim 1, **characterized in that**, to send a message to a mobile device (9) that has been detected, it further consists in, after selecting primary identifiers;
· accessing a first table listing the correspondences between mobile device primary identifiers and authorizations to access a local area network, in order to retain from the selected primary identifiers those associated with a local area network authorization, and then
**·** sending messages to the mobile devices (9) whose primary identifiers have been retained.

3. A method according to claim 1, **characterized in that** each message includes its own secondary identifier and, in the event of an attempt to connect to the local area network, the user of a selected or retained mobile device must give the secondary identifier that he has received.

4. A method according to claim 3, **characterized in that**, on receiving a secondary identifier associated with a tertiary identifier, a second table listing correspondences between secondary identifiers and tertiary identifiers is accessed via said local area network, in order to authenticate said association, and, in the event of authentication, the mobile device (9) is then authorized to access said local area network.

5. A method according to claim 3, **characterized in that** the secondary identifier is for single use.

6. A method according to claim 1, **characterized in that** said messages are sent using the Short Message Service.

7. A method according to claim 1, **characterized in that** in the event of access to a secure private network via said local area network, a connection is set up between said private network and said local area network via a secure tunnel.

8. A method according to claim 1, **characterized in that**, in the event of access to a chargeable service via said local area network, payment data relating to said accessed service is recovered in order to bill said service via said main network of the mobile device (9) that accessed said service.

9. A device for controlling access to a wireless communications local area network having a local coverage area, at least part of which is included in a main coverage area of a main communications network equipped with mobile communications device positioning means (8), and including management means (20) that are connected to said positioning means (8) and are adapted to
i) compare the positions of at least some of said mobile devices (9) to the position of at least one local area, to select the primary identifiers of the mobile devices positioned in said local area, or positioned at a distance from the border of said local area, this distance being less than a determined threshold distance, and **characterized in that** it includes management means adapted to
ii) send instructions to a messaging server (10) of the main network, the instructions including the primary identifier of each selected mobile device (9) so that the server sends automatically to each of said mobile devices a message telling its user that it is in the local area of a local area network to which it can connect.

10. A device according to claim 9, **characterized in that** it comprises a first memory (18) for storing a first table listing the correspondences between primary identifiers of mobile devices (9) and local network access authorizations, and said management module (20) is connected to the first memory (18) and adapted to access the first correspondence table to retain the selected primary identifiers that have an authorization to access the local area network in whose local area the associated mobile device is positioned.

11. A device according to claim 9, **characterized in that** said management means (20) are adapted to send said messaging server (10) instructions including an assigned secondary identifier that is specific to each mobile device (9) retained and has to be given by a mobile device corresponding to one of the access points (12, 14) of the local area network in the event of an attempt to connect to said local area network.

12. A device according to claim 11, **characterized in that** it comprises a second memory (21) supplied by said management means (20) and adapted to store a second table listing the correspondences between the assigned secondary identifiers and associated tertiary identifiers, the latter being supplied conjointly with the associated secondary identifier.

13. A device according to claim 12, **characterized in that** said second memory (21) is adapted to eliminate from said second table each secondary identifier that a mobile device (9) has used to access said local area network.

14. A device according to claim 9, **characterized in that** said management means (20) are adapted to control access to at least two independent local area networks.

15. A communications installation comprising a main communications network and a wireless communications local area network, which installation is **characterized in that** it further comprises a device according to any one of claims 9 to 14.

16. An installation according to claim 15, **characterized in that** it comprises an authentication server (19) that includes said second memory (21) and is adapted, on receiving a tertiary identifier and a secondary identifier, to execute an identifier authentication procedure based on comparison with identifiers stored in the second table, and each local area network includes an access point (12, 14) adapted, on receiving a secondary identifier associated with a tertiary identifier,
i) to send said authentication server (19) a request for authentication of said secondary and tertiary identifiers received, and
ii) in the event of authentication by said authentication server (19), to authorize the mobile device (9) designated by the tertiary identifier to access the local area network in which it is positioned.

17. An installation according to claim 15, **characterized in that** it also comprises a secure private network that comprises an access server (16, 17) connected to at least one of said main networks and connecting means connected to said networks and adapted, in the event of a request to access a secure private network via one of said local area networks, to set up a secure tunnel between said private network and said local area network.

18. An installation according to claim 17, **characterized in that** said private network is connected to a public network.

19. An installation according to claim 15, **characterized in that** it comprises a billing server (19) adapted, in the event of access to a chargeable service by a mobile device (9) via one of said local area networks, to recover payment data relating to said service accessed and to send an invoice representative of said service to a management server (10) of the main network of which the user of said mobile device is a customer.

20. An installation according to claim 15, **characterized in that** said local area network is connected to the public network via an access server of an access provider (1).

21. An installation according to claim 15, **characterized in that** said main network is connected to the public network.

22. The use of the method, device, and installation according to any preceding claim in the networks selected from the group comprising: the public communications networks for mobile devices that offer messaging and location services; wireless local area networks of the WLAN type; and satellite access networks.

23. A use according to claim 22, **characterized in that** the public communications networks for mobile devices comprise the GSM, GPRS, and UMTS networks.

## Patentansprüche

1. Zugriffskontrollverfahren für mindestens ein drahtloses lokales Netzwerk mit einem lokalen Abdeckungsbereich, der zumindest teilweise im Hauptabdeckungsbereich mindestens eines Haupt-Kommunikationsnetzwerks enthalten ist, wobei dieses Verfahren die folgenden Schritte umfasst:
i) Ermittlung der Position zumindest bestimmter mobiler Kommunikationsendgeräte (9), die Kunden des Hauptnetzwerks gehören, die sich im Hauptbereich aufhalten,
ii) Vergleich der genannten Positionen zumindest einiger der genannten mobilen Endgeräte (9) in den Verwaltungseinrichtungen (20) des Hauptnetzwerks mit der Position mindestens eines lokalen Bereichs zur Auswahl der primären Kennungen der mobilen Endgeräte, die sich in dem genannten lokalen Bereich befinden oder die sich in einem bestimmten Abstand zur Grenze des genannten lokalen Bereichs aufhalten, wobei dieser Abstand unter einem vorab definierten Entfernungsgrenzwert liegt,
**dadurch gekennzeichnet, dass**
iii) Anweisungen an einen E-Mail-Server (10) des Hauptnetzwerks adressiert werden, die mindestens die primäre Kennung jedes ausgewählten mobilen Endgeräts (9) beinhalten, so dass er automatisch eine Meldung an jedes der genannten mobilen Endgeräte sendet, in der seinem Nutzer mitgeteilt wird, dass er sich im lokalen Bereich eines lokalen Netzes aufhält, in das er sich einloggen kann.

2. Verfahren gemäß Anspruch 1, **dadurch gekennzeichnet, dass** die Adressierung einer Meldung an ein mobiles Endgerät (9), das erfasst wurde, nach der Auswahl der primären Kennungen außerdem Folgendes umfasst:
- Zugriff auf eine erste Zuordnungstabelle zwischen den primären Kennungen der mobilen Endgeräte und Zugriffsberechtigungen für ein lokales Netzwerk, so dass aus den ausgewählten primären Kennungen diejenigen ermittelt werden können, denen eine Zugriffsberechtigung für das genannte lokale Netzwerk zugeordnet ist, und anschließend
- Adressierung von Meldungen an die mobilen Endgeräte (9), deren primäre Kennungen ausgewählt wurden.

3. Verfahren gemäß Anspruch 1, **dadurch gekennzeichnet, dass** jede Meldung eine eigene sekundäre Kennung umfasst, sowie **dadurch**, dass der Nutzer eines ausgewählten oder erfassten mobilen Endgeräts im Fall eines Verbindungsversuchs mit dem lokalen Netzwerk die empfangene sekundäre Kennung eingeben muss.

4. Verfahren gemäß Anspruch 3, **dadurch gekennzeichnet, dass** man beim Empfang einer sekundären Kennung, die einer tertiären Kennung zugeordnet ist, über das genannte lokale Netzwerk auf eine zweite Zuordnungstabelle zwischen sekundären Kennungen und tertiären Kennungen zugreift, um die genannte Verbindung zu authentifizieren, und dass im Fall der Authentifizierung dem mobilen Endgerät (9) ermöglicht wird, auf das genannte lokale Netzwerk zuzugreifen.

5. Verfahren gemäß Anspruch 3, **dadurch gekennzeichnet, dass** die sekundäre Kennung für den einmaligen Gebrauch bestimmt ist.

6. Verfahren gemäß Anspruch 1, **dadurch gekennzeichnet, dass** die genannten Meldungen entsprechend dem Modus "Short Messaging System" adressiert werden.

7. Verfahren gemäß Anspruch 1, **dadurch gekennzeichnet, dass** im Fall eines Zugriffs auf ein gesichertes privates Netzwerk über das genannte lokale Netzwerk eine Verbindung mit dem genannten privaten und lokalen Netzwerk über einen gesicherten Tunnel hergestellt wird.

8. Verfahren gemäß Anspruch 1, **dadurch gekennzeichnet, dass** im Fall eines Zugriffs auf einen kostenpflichtigen Dienst über das genannte lokale Netzwerk eine Erfassung der Zahlungsdaten für den genannten Dienst im Hinblick auf die Fakturierung des genannten Dienstes über das genannte Hauptnetzwerk durchgeführt wird, dem das genannte mobile Endgerät (9) zugeordnet ist, das auf den genannten Dienst zugegriffen hat.

9. Gerät zur Zugriffskontrolle auf mindestens ein drahtloses lokales Kommunikationsnetzwerk mit einem lokalen Abdeckungsbereich, der zumindest teilweise in dem Hauptabdeckungsbereich mindestens eines Haupt-Kommunikationsnetzwerks enthalten ist, das mit Positionseinrichtungen für mobile Kommunikationsendgeräte (9) ausgerüstet ist und Verwaltungseinrichtungen (20) umfasst, die mit den genannten Positionseinrichtungen (8) verbunden und entsprechend ausgeführt sind, um
i) die Position zumindest bestimmter der genannten mobilen Endgeräte (9) mit der Position mindestens eines lokalen Bereichs zu vergleichen, um die primären Kennungen der mobilen Endgeräte auszuwählen, die sich in dem genannten lokalen Bereich befinden oder in einem bestimmten Abstand zur Grenze des genannten lokalen Bereichs angeordnet sind, wobei dieser Abstand unter einem vorher definierten Entfernungsgrenzwert liegt, und **dadurch gekennzeichnet, dass** es Verwaltungseinrichtungen umfasst, die entsprechend ausgeführt sind, um
ii) an einen E-Mail-Server (10) des Hauptnetzwerks Anweisungen zu adressieren, die mindestens eine primäre Kennung jedes ausgewählten mobilen Endgeräts (9) beinhalten, so dass an jedes der genannten mobilen Endgeräte automatisch eine Meldung gesandt wird, in der seinem Nutzer mitgeteilt wird, dass er sich im lokalen Bereich eines lokalen Netzwerks aufhält, in das er sich einloggen kann.

10. Gerät gemäß Anspruch 9, **dadurch gekennzeichnet, dass** es einen ersten Speicher (18) umfasst, in dem eine erste Zuordnungstabelle zwischen den primären Kennungen der mobilen Endgeräte (9) und Zugriffsberechtigungen für ein lokalen Netzwerk gespeichert ist, sowie **dadurch**, dass das genannte Verwaltungsmodul (20) mit dem ersten Speicher (18) verbunden und entsprechend ausgeführt ist, um auf die erste Zuordnungstabelle zuzugreifen, um aus den ausgewählten primären Kennungen diejenigen zu erfassen, die über eine Zugriffsberechtigung für das lokale Netzwerk in dem lokalen Bereich verfügen, in dem sich das entsprechende mobile Endgerät befindet.

11. Gerät gemäß Anspruch 9, **dadurch gekennzeichnet, dass** die genannten Verwaltungseinrichtungen (20) entsprechend ausgeführt sind, um dem genannten E-Mail-Server (10) Anweisungen zu adressieren, die eine sekundäre Kennung enthalten, die jedem ausgewählten mobilen Endgerät (9) speziell zugeordnet ist, wobei die genannte sekundäre Kennung von dem entsprechenden mobilen Endgerät an einem der Zugriffspunkte (12, 14) des lokalen Netzwerks bei einem Verbindungsversuch mit dem genannten lokalen Netzwerk angegeben werden muss.

12. Gerät gemäß Anspruch 11, **dadurch gekennzeichnet, dass** es einen zweiten Speicher (21) umfasst, der von den genannten Verwaltungseinrichtungen (20) genutzt wird und entsprechend ausgeführt ist, um eine zweite Zuordnungstabelle zwischen den zugeordneten sekundären Kennungen und den zugeordneten tertiären Kennungen zu speichern, wobei Letztere zusammen mit der entsprechenden sekundären Kennung angegeben werden muss.

13. Gerät gemäß Anspruch 12, **dadurch gekennzeichnet, dass** der genannte zweite Speicher (21) entsprechend ausgeführt ist, um die genannte zweite Tabelle zu löschen, wobei jede sekundäre Kennung von einem mobilen Endgerät (9) für den Zugriff auf das genannte lokale Netzwerk verwendet wurde.

14. Gerät gemäß Anspruch 9, **dadurch gekennzeichnet, dass** die genannten Verwaltungseinrichtungen (20) entsprechend ausgeführt sind, um den Zugriff auf mindestens zwei unabhängige lokale Netzwerke zu kontrollieren.

15. Kommunikationsvorrichtung mit mindestens einem Haupt-Kommunikationsnetzwerk und mindestens einem drahtlosen lokalen Kommunikationsnetzwerk, **dadurch gekennzeichnet, dass** sie außerdem ein Gerät gemäß einem der Ansprüche 9 bis 14 umfasst.

16. Vorrichtung gemäß Anspruch 15, **dadurch gekennzeichnet, dass** sie einen Authentifizierungsserver (19) umfasst, der den genannten zweiten Speicher (21) umfasst und entsprechend ausgeführt ist, um beim Empfang einer tertiären Kennung und einer sekundären Kennung ein Authentifizierungsverfahren für die Kennungen auszuführen, indem diese mit den in der zweiten Tabelle gespeicherten Kennungen verglichen werden, sowie **dadurch**, dass jedes lokale Netzwerk mindestens einen Zugriffspunkt (12, 14) umfasst, der entsprechend ausgeführt ist, um beim Empfang einer sekundären Kennung, die einer tertiären Kennung zugeordnet ist, Folgendes auszuführen:
- Adressierung einer Authentifizierungsanfrage für die empfangene sekundäre und tertiäre Kennung an den genannten Authentifizierungsserver (19), und
- im Fall der Authentifizierung durch den genannten Authentifizierungsserver (19), Freigabe für das von der tertiären Kennung bezeichnete mobile Endgerät (9), auf das lokale Netzwerk, in dem es sich befindet, zuzugreifen.

17. Vorrichtung gemäß Anspruch 15, **dadurch gekennzeichnet, dass** sie zudem mindestens ein gesichertes privates Netzwerk, das mindestens einen Zugriffsserver (16, 17) umfasst, der mit mindestens einem der genannten Hauptnetzwerke verbunden ist, sowie Verbindungseinrichtungen umfasst, die mit den genannten Netzwerken verbunden und in der Lage sind, im Fall einer Zugriffsanforderung für ein gesichertes privates Netzwerk über eines der genannten lokalen Netzwerke einen gesicherten Tunnel zwischen dem genannten privaten Netzwerk und dem genannten lokalen Netzwerk zu erstellen.

18. Vorrichtung gemäß Anspruch 17, **dadurch gekennzeichnet, dass** das genannte private Netzwerk mit einem öffentlichen Netzwerk verbunden ist.

19. Vorrichtung gemäß Anspruch 15, **dadurch gekennzeichnet, dass** sie einen Fakturierungsserver (19) umfasst, der entsprechend ausgeführt ist, um im Fall des Zugriffs eines mobilen Endgeräts (9) über eines der genannten lokalen Netzwerke auf einen kostenpflichtigen Dienst die Zahlungsdaten in Bezug auf den genannten Dienst zu erfassen und eine dem genannten Dienst entsprechende Rechnung an einen Verwaltungsserver (10) des Hauptnetzwerks zu übermitteln, dessen Kunde der Nutzer des genannten mobilen Endgeräts ist.

20. Vorrichtung gemäß Anspruch 15, **dadurch gekennzeichnet, dass** das genannte lokale Netzwerk über einen Zugriffsserver eines Internet-Anbieters (1) mit dem öffentlichen Netzwerk verbunden ist.

21. Vorrichtung gemäß Anspruch 15, **dadurch gekennzeichnet, dass** das genannte Hauptnetzwerk mit dem öffentlichen Netzwerk verbunden ist.

22. Umsetzung des Verfahrens, des Geräts und der Vorrichtung gemäß einem der vorgenannten Ansprüche in Netzwerken aus einer Gruppe, die öffentliche Kommunikationsnetzwerke für mobile Endgeräte, die E-Mail- und Ortungsdienste anbieten, drahtlose lokale Netzwerke vom Typ WLAN und Satellitennetzwerke umfassen.

23. Umsetzung des Verfahrens gemäß Anspruch 22, **dadurch gekennzeichnet, dass** die PLMN-Netzwerke GSM-, GPRS- und UMTS-Netzwerke umfassen.
